# EUROPÄISCHE PATENTSCHRIFT

(11) **EP 3 010 384 B1**
(45) Veröffentlichungstag und Bekanntmachung des Hinweises auf die Patenterteilung: **01.02.2017**
(21) Anmeldenummer: 15719441.6
(22) Anmeldetag: 22.04.2015
(51) Int. Cl.: A47J 43/25, A47J 17/02, B26D 3/18, A47J 43/044

(54) **VORRICHTUNG ZUM ZERKLEINERN VON LEBENSMITTELN**
DEVICE FOR CHOPPING FOOD
DISPOSITIF DE BROYAGE DE DENRÉES ALIMENTAIRES

(30) Priorität: 05.05.2014 DE 202014102077 U
(43) Veröffentlichungstag der Anmeldung: 27.04.2016
(73) Patentinhaber: Genius GmbH, 65549 Limburg (DE)
(72) Erfinder: REPAC, Cedomir, 65611 Brechen (DE)
(74) Vertreter: Grabovac, Dalibor
(86) Internationale Anmeldenummer: PCT/EP2015/058657
(87) Internationale Veröffentlichungsnummer: WO 2015/169592

(56) Entgegenhaltungen:
- WO-A1-2011/123522
- DE-U1-202011 050 041
- US-A- 5 996 483

## Beschreibung

Die Erfindung betrifft eine Vorrichtung zum Zerkleinern von Lebensmitteln mit einem Basisteil, das eine Aufnahme für ein Schneidteil aufweist und an dem ein Betätigungsteil derart gelenkig festlegbar ist, dass das Betätigungsteil zum Hindurchdrücken von zu zerkleinerndem Lebensmittelgut gegen das Schneidteil schwenkbar ist.

Geräte der eingangs genannten Art zum Zerkleinern von kleinerem Lebensmittelgut, wie beispielsweise Champignons, sind beispielsweise als Handgeräte bekannt.

Beispielsweise ist in DE 102 42 651 A1 ein Schneidgerät für Lebensmittel oder dergleichen Schneidgut beschrieben, mit einem Schneidteil, an dem mehrere, im Wesentlichen parallel angeordnete Messer mit Schneiden gehaltert sind, die eine Schneidfläche für das Schneidgut bilden, um dieses in Streifen oder Scheiben oder dergleichen zu teilen. Ein als Stempel ausgebildetes Betätigungsteil besitzt eine Bodenfläche, die unter Zwischenlage des Schneidgutes auf die Schneidfläche hin und von dieser wegbewegbar ist. Die Bodenfläche weist mit den Messern im Wesentlichen korrespondierende nut- oder schlitzförmige Aufnahmen mit zwischenliegenden Stegen auf. Die Bodenfläche beaufschlagt das Schneidgut und bewegt dieses auf die Schneidfläche hin beziehungsweise zwischen den Messern hindurch. Es ist vorgesehen, dass das Schneidteil und der Stempel im Bereich des freien Endes jeweils eines Zangenarmes angeordnet sind, wobei die Zangenarme im Bereich des anderen freien Endes mittels eines Schwenklagers schwenkbar verbunden sind und wobei die Zangenarme mittels einer Feder in eine Öffnungsstellung vorgespannt werden.

Ein ähnliches Gerät mit einer besonderen Schneidklingenanordnung ist aus DE 20 2007 018 922 U1 bekannt.

Bei den vorgenannten Geräten handelt es sich um Geräte, die wie eine Zange in einer Hand gehalten werden und bei denen der Zerkleinerungsvorgang durch Schließen der Hand, in der die Zerkleinerungsvorgang gehalten wird, und ein hierdurch verursachtes Zusammendrücken von zwei Zangenarmen bewirkt wird.

Es gibt auch, wie nachfolgend beschrieben ist, vollkommen anders ausgebildete Geräte, die nicht in der Hand gehalten werden, sondern auf einer Arbeitsfläche aufgestellt werden. Zumeist weisen diese Geräte ein Gefäß für das zerkleinerte Gut auf. Diese Geräte haben mit den vorgenannten Geräten einzig das Zerkleinerungsprinzip, nämlich das Hindurchdrücken des zu zerkleinernden Gutes durch eine Schneideinrichtung, gemeinsam.

Beispielsweise ist aus DE 10 2009 023 167 A1 eine Vorrichtung zum Schneiden von Nahrungsmitteln, wie Obst und Gemüse, mit einem mehrere Schneiden aufweisenden Schneidteil und einem Betätigungsteil, welche gegeneinander verschwenkbar gelagert sind, bekannt. Zum Schneiden des Schneidgutes wird das Betätigungsteil gegen das Schneidteil gedrückt, wobei das Betätigungsteil einen Stempel aufweist, der das Schneidgut durch das Schneidteil hindurchdrückt, wobei die Schneiden in korrespondierende Vertiefungen des Stempels eintauchen. Das Schneidteil weist einen Schneidrahmen auf, in dem Schneidklingen gehalten sind. Die Vorrichtung weist ferner ein Deckelteil zum Anbringen an einem Aufnahmebehälter für das geschnittene Schneidgut auf, wobei das Deckelteil eine Öffnung aufweist, die einen Durchgang für das geschnittene Schneidgut bildet.

Andere Vorrichtungen zum Aufstellen auf einer Arbeitsfläche sind beispielsweise aus DE 20 2011 050 041 U1 und aus DE 21 2005 000 048 U1 bekannt.

Aus US 1,263,151 ist eine Vorrichtung bekannt, bei der je nach Schneidanforderung ein Schneideinsatz aus einer Vielzahl unterschiedlicher, bevorrateter Schneideinsätze zum Zerkleinern von Lebensmittelgut eingelegt wird.

Aus GB 2 032 260 A, EP 1 918 078 A2 und DE 91 10 587 U1 sind verschiedene Lebensmittelhobel bekannt. Diese Lebensmittelhobel weisen zum einen ein Horizontalmesser auf und können zum anderen zusätzlich Vertikalmesser an ihrer Schneidseite aufweisen. Das Horizontalmesser dient zum Hobeln bzw. zum Schneiden des Lebensmittelgutes in Scheiben und die zusätzlichen Vertikalmessern zum Schneiden des Lebensmittelgutes in Streifen.

Heute übliche Speisenzubereitungen, wie z.B. Salate, erfordern eine vielfältige Möglichkeit zur Zerkleinerung von verschiedenen Lebensmittelgütern. Zum einen ist es beispielweise erforderlich ein Lebensmittelgut, wie z.B. eine Gurke, zur Zubereitung eines Salates zu hobeln. Zum anderen ist es für die Zubereitung desselben Salates zusätzlich erforderlich, ein weiteres Lebensmittelgut, wie z.B. Käse oder Fleischteile, durch Hindurchdrücken durch ein Schneidteil zu schneiden. Für die Zubereitung solcher Speisen werden unterschiedliche Geräte benötigt, die jeweils spezifisch ausschließlich nach einem vorgegebenen Zerkleinerungsprinzip arbeiten und die vollkommen getrennt voneinander zum Einsatz kommen. Der Benutzer muss die mit den unterschiedlichen Geräten zerkleinerten Lebensmittelgüter nach den Zerkleinerungsvorgängen zusammen führen, um sie dann, beispielsweise zur Zubereitung eines gemischten Salats, miteinander vermischen zu können.

Es ist daher die Aufgabe der vorliegenden Erfindung eine Vorrichtung anzugeben, die es ermöglicht, Lebensmittelgüter auf unterschiedliche Weise zerkleinern zu können.

Die Aufgabe wird durch eine Vorrichtung der eingangs genannten Art gelöst, die dadurch gekennzeichnet ist, dass eine Antriebsvorrichtung zum drehenden Antreiben von Rotationsmessern vorgesehen ist, die im Austausch gegen das Betätigungsteil gelenkig an dem Basisteil festlegbar oder festgelegt ist.

Die erfindungsgemäße Vorrichtung hat den Vorteil, dass mit demselben Gerät alternativ oder nach einem Zerkleinerungsvorgang durch Hindurchdrücken durch ein Schneidteil ein Zerkleinerungsvorgang mittels wenigstens eines Rotationsmessers erfolgen kann.

Eine solche Ausführung hat den ganz besonderen Vorteil, dass dem Benutzer zwei verschiedene Zerkleinerungsmöglichkeiten zur Verfügung stehen, zwischen denen er wählen kann. Beispielsweise kann mit demselben Gerät nach einem Zerkleinerungsvorgang durch Hindurchdrücken durch ein Schneidteil ein Zerkleinerungsvorgang mit den Rotationsmessern erfolgen. Auch kann beispielsweise nach einem Zerkleinerungsvorgang mit den Rotationsmessern ein Zerkleinerungsvorgang durch Hindurchdrücken durch ein Schneidteil erfolgen. Der Benutzer muss lediglich das Betätigungsteil an dem Basisteil festlegen und ein Schneidgitter einsetzen, wenn er einen Zerkleinerungsvorgang durch Hindurchdrücken durch ein Schneidteil wünscht. Alternativ kann der Benutzer statt des Betätigungsteils die Antriebsvorrichtung an dem Basisteil, insbesondere gelenkig, festlegen und die Rotationsmesser in die Kammern einsetzen, wenn er einen Zerkleinerungsvorgang unter Verwendung der Rotationsmesser wünscht.

Bei einer vorteilhaften Ausführung weist die Antriebsvorrichtung wenigstens eine Handkurbel auf.

Bei einer besonders vorteilhaften Ausführung weist die Antriebsvorrichtung ein Getriebe, insbesondere ein Übersetzungsgetriebe auf. Auf diese Weise ist es möglich, das bzw. die Rotationsmesser manuell, beispielsweise mittels einer Handkurbel, mit besonders hoher Drehzahl anzutreiben.

Die Vorrichtung weist bei einer besonderen Ausführung wenigstens eine Abtriebswelle auf, an die ein Rotationsmesser drehfest ankoppelbar ist. Insbesondere kann vorteilhaft vorgesehen sein, dass die Antriebsvorrichtung zwei Abtriebswellen aufweist, an die jeweils ein Rotationsmesser drehfest ankoppelbar ist.

Durch die gelenkige Anbindung der Antriebsvorrichtung hat der Benutzer darüber hinaus den ganz besonderen Vorteil, dass er ohne größeren Aufwand, insbesondere auch dann, wenn das Basisteil auf einer Gefäßöffnung festgelegt ist, das Betätigungsteil bzw. die Antriebsvorrichtung nach oben verschwenken kann, um beispielsweise nachzusehen, wie der Füllstand im Gefäß ist oder um verklemmte Lebensmittelteile zu entfernen.

Die gelenkige Verbindung zwischen dem Basisteil und dem Betätigungsteil bzw. die gelenkige Verbindung zwischen dem Basisteil und der Antriebsvorrichtung kann auf unterschiedliche Weise realisiert sein. Von besonderem Vorteil sind gelenkige Verbindungen, die auf einfache Weise, insbesondere werkzeugfrei und/oder durch einfaches Zusammenstecken und Auseinanderziehen, zusammengefügt und wieder gelöst werden können.

Bei einer besonderen Ausführung weist das Basisteil einerseits wenigstens einen Gelenkkopf und das Betätigungsteil und/oder die Antriebsvorrichtung andererseits eine korrespondierende Gelenkaufnahme zur Bildung der gelenkigen Verbindung auf. Natürlich kann umgekehrt auch vorgesehen sein, dass das Betätigungsteil und/oder die Antriebsvorrichtung einerseits wenigstens einen Gelenkkopf und das Basisteil andererseits eine korrespondierende Gelenkaufnahme zur Bildung der gelenkigen Verbindung aufweisen.

Bei einer besonderen Ausführungsform ist die gelenkige Verbindung derart ausgebildet, dass das Betätigungsteil oder die Antriebsvorrichtung wenigstens in einer vorgegebenen Schwenkstellung, von dem Basisteil, insbesondere werkzeugfrei und/oder ausschließlich durch Auseinanderziehen von Betätigungsteil und Basisteil, lösbar ist. Insbesondere kann die gelenkige Verbindung auch derart ausgebildet sein, dass das Betätigungsteil oder die Antriebsvorrichtung ausschließlich in einer vorgegebenen Schwenkstellung oder in einem vorgegebenen Schwenkstellungsbereich, von dem Basisteil, insbesondere werkzeugfrei und/oder ausschließlich durch Auseinanderziehen von Betätigungsteil und Basisteil, lösbar ist.

Die vorgegebene Schwenkstellung kann beispielsweise bei einem Winkel zwischen der Ebene des Basisteils und der Ebene des Betätigungsteils im Bereich von 80° bis 100°, insbesondere von 90°, vorliegen. Die beiden Ebenen sind dadurch charakterisiert, dass sie eine gemeinsame Schnittgerade parallel zu der Drehachse von dem Betätigungsteil und dem Basisteil haben. Insbesondere kann auch vorgesehen sein, dass der vorgegebene Schwenkstellungsbereich einen Winkelbereich zwischen der Ebene des Basisteils und der Ebene des Betätigungsteils von 70° bis 110°, insbesondere von 80° bis 100°, insbesondere von 85° bis 95° aufweist.

Um eine Lösbarkeit der gelenkigen Verbindung zu erreichen weist die Gelenkkopfaufnahme bei einer besonderen Ausführung eine radiale Öffnung auf, durch die der Gelenkkopf aus der Gelenkkopfaufnahme in radialer Richtung herausnehmbar oder einsetzbar ist. Ganz allgemein kann vorgesehen sein, dass die Gelenkkopfaufnahme eine Öffnung aufweist, durch die der Gelenkkopf aus der Gelenkkopfaufnahme entlang einer von der Richtung der Schwenkachse der gelenkigen Verbindung verschiedenen Richtung herausnehmbar oder einsetzbar ist.

Insbesondere bei einer der vorgenannten Vorrichtungen kann vorteilhaft vorgesehen sein, dass der Gelenkkopf im Querschnitt unrund, insbesondere quaderförmig, ausgebildet ist. Ein solcher Gelenkkopf kann nämlich in einer bestimmten Schwenkstellung durch die Öffnung der Gelenkkopfaufnahme in diese eingeführt werden, wobei er jedoch in einer anderen Schwenkstellung durch diese Öffnung nicht aus der Gelenkkopfaufnahme entweichen kann.

Bei einer ganz besonders vorteilhaften Ausführung weist die Vorrichtung wenigstens eine Antriebseinrichtung, insbesondere einen Federantrieb, zum Unterstützen oder Bewirken der Schwenkbewegung des Betätigungsteils und/oder des Lebensmittelhobels von einer Schließstellung in eine Einlegestellung und/oder von einer Einlegestellung in eine Schließstellung auf.

Eine solche Vorrichtung hat insbesondere den ganz besonderen Vorteil, dass sie einarmig bedient werden kann. Beispielsweise kann vorgesehen sein, dass der Benutzer mit der einen Hand zu zerkleinerndes Schneidgut auf das Schneidteil auflegt und anschließend mit der anderen Hand das Betätigungsteil gegen das Schneidteil verschwenkt und dabei eine Feder einer als Federantrieb ausgebildeten Antriebseinrichtung spannt. Durch die von der gespannten Feder ausgeübten Kraft kann sich das Betätigungsteil nach dem erfolgten Zerkleinerungsvorgang selbsttätig - also ohne dass der Benutzer das Basisteil der einen Hand festhalten muss - wieder von der Schließstellung in die Einlegestellung zurück bewegen. Der Benutzer kann folglich die eine Hand ausschließlich dazu verwenden, nach jedem Zerkleinerungsvorgang weiteres zu zerkleinerndes Gut auf das Schneidteil aufzulegen, während er die andere Hand ausschließlich dazu verwendet, das Betätigungsteil von der Einlegestellung in die Schließstellung zu verschwenken.

Auf diese Weise kann in derselben Zeit eine wesentlich größere Menge an Lebensmittelgut verarbeitet werden, weil die Abläufe sehr viel schneller und ohne lästiges und zeitraubendes Umgreifen ausgeführt werden können.

Bei einer vorteilhaften Ausführungsform ist vorgesehen, dass die Antriebseinrichtung wahlweise zuschaltbar oder abschaltbar ist und/oder dass die Unterstützungskraft der Antriebseinrichtung einstellbar ist.

Ein Abschalten erfolgt vorzugsweise derart, dass das Betätigungsteil bei abgeschalteter Antriebseinrichtung relativ zu dem Basisteil frei verschwenkbar ist. Es kann jedoch auch vorgesehen sein, dass ein Abschalten in der Weise erfolgt, dass keine Verschwenkung des Betätigungsteils relativ zu dem Basisteil mehr möglich ist.

Eine solche Ausführung hat den Vorteil, dass sie je nach Art des zu zerkleinernden Gutes so eingestellt werden kann, dass immer ein schneller und effizienter Zerkleinerungsprozess ermöglicht ist.

Beispielsweise kann bei einer Vorrichtung, bei der die Antriebseinrichtung wenigstens eine Feder aufweist, die beim Schwenken des Betätigungsteils von der Einlegestellung in die Schließstellung gespannt wird und die sich zur Unterstützung der Schwenkbewegung des Betätigungsteils von der Schließstellung in die Einlegestellung entspannt, ein Abschalten der Antriebseinrichtung erfolgen, wenn besonders harte Lebensmittel zerkleinert werden sollen, wofür der Benutzer ohnehin seine gesamte Kraft benötigt. Auf diese Weise ist vermieden, dass der Benutzer zusätzlich beim Schwenken des Betätigungsteils von der Einlegestellung in die Schließstellung zusätzlich Energie zum Spannen der Feder aufbringen muss.

Zum Zerkleinern von Lebensmittelgut, das mit geringem Kraftaufwand mittels des Betätigungsteils durch das Schneidteil gedrückt werden kann, kann der Antrieb hingegen zugeschaltet werden; beispielsweise um das Schwenken des Betätigungsteils von der Schließstellung in die Einlegestellung zu unterstützen oder selbstständig zu bewirken.

In vorteilhafter Weise ist es bei einer Vorrichtung, bei der die Unterstützungskraft der Antriebseinrichtung einstellbar ist, möglich, beispielsweise in Abhängigkeit von der Schneidbarkeit des Lebensmittelgutes eine Zwischeneinstellung zwischen vollständigem Abschalten und vollständigem Zuschalten zu wählen.

Bei einer besonderen Ausführung weist das Basisteil einen Durchgang für das zu zerkleinernde und/oder das zerkleinerte Lebensmittelgut auf. Alternativ oder zusätzlich kann auch vorgesehen sein, dass eine Halteeinrichtung zum rotierbaren Lagern wenigstens eines Rotationsmessers einen Durchgang für das zu zerkleinernde und/oder das zerkleinerte Lebensmittelgut aufweist.

Um die Vorrichtung von einem Schneiden durch Hindurchdrücken auf ein Schneiden mit den Rotationsmessern umzustellen, muss bei einer besonderen Ausführung lediglich das Schneidteil aus der Aufnahme entfernt werden und das Betätigungsteil durch die Antriebsvorrichtung ersetzt, sowie wenigstens ein Rotationsmesser beispielsweise in ein Gefäß der Vorrichtung eingesetzt werden.

Statt des Schneidteils kann vorteilhaft eine Halteeinrichtung in das Basisteil zum rotierbaren Lagern wenigstens eines Rotationsmessers in das Basisteil eingesetzt werden. Insbesondere kann eine solche Halteeinrichtung zwei Lageraufnahmen zum rotierbaren Lagern von zwei Rotationsmessern aufweisen. Beispielsweise kann vorteilhaft vorgesehen sein, dass die Lageraufnahmen durch zwei zueinander parallele Durchbrüche in der Halteeinrichtung gebildet sind.

Es ist ganz allgemein von besonderem Vorteil, wenn eine Halteeinrichtung vorhanden ist, die zum rotierbaren Lagern des wenigstens einen Rotationsmessers in das Basisteil einsetzbar ist oder eingesetzt ist. Eine solche Ausführung hat den Vorteil, dass das freie Ende des Rotationsmessers bzw. die freien Enden der Rotationsmesser sicher in Position gehalten sind, so dass die Antriebsvorrichtung, beispielsweise nach einem Zuführvorgang von zu zerkleinerndem Lebensmittelgut, schnell und zuverlässig wieder mit dem Rotationsmesser, bzw. den Rotationsmessern, wirkverkoppelt werden kann, ohne dass der Benutzer zusätzliche Justierarbeit leisten muss.

Bei einer besonders vorteilhaften Ausführung weist die Vorrichtung zwei Rotationsmesser zum rotierbaren Einsetzen in das Gefäß auf, wobei die Antriebsvorrichtung zum Antreiben der beiden Rotationsmesser ausgebildet ist. Bei dieser Ausführung weist die Halteeinrichtung vorzugsweise zwei Lageraufnahmen zum rotierbaren Lagern der zwei Rotationsmesser auf. Insbesondere kann vorteilhaft vorgesehen sein, dass die Lageraufnahmen durch zwei zueinander parallele Durchbrüche in der Halteeinrichtung gebildet sind.

Um ein schnelles Zuführen von zu zerkleinerndem Lebensmittelgut zu ermöglichen, kann die Halteeinrichtung einen Durchgang für das zu zerkleinernde und/oder zerkleinerte Lebensmittelgut aufweisen.

Bei einer besonders vorteilhaften Ausführung ist die Halteeinrichtung durchsichtig ausgebildet. Eine solche Ausführung hat den besonderen Vorteil, dass der Benutzer den Füllstand des Gefäßes leichter überprüfen kann.

Bei einer ganz besonders vorteilhaften Ausführung ist die Antriebsvorrichtung gelenkig an dem Basisteil festlegbar oder festgelegt. Insbesondere kann vorteilhaft vorgesehen sein, dass die gelenkig an dem Basisteil festgelegte Antriebsvorrichtung wahlweise in eine Öffnungsstellung oder eine Geschlossenstellung schwenkbar ist. Eine solche Ausführung hat den besonderen Vorteil, dass die Antriebsvorrichtung, beispielsweise für ein Zuführen von zu zerkleinerndem Lebensmittelgut, kurzfristig in eine Öffnungsstellung geschwenkt werden kann, ohne dass die Antriebsvorrichtung vollständig von dem Basisteil gelöst werden muss. Auf diese Weise ist erreicht, dass die Antriebsvorrichtung nach einem Zuführvorgang schnell und ohne zusätzlichen Justieraufwand wieder mit den Rotationsmesser an, deren freie Enden von der Halteeinrichtung gehalten sind, wirkverkoppelt werden kann.

Bei einer besonders individuell einsetzbaren Ausführung ist vorgesehen, dass gleichzeitig mehrere Schneidteile in die Aufnahme einsetzbar sind und/oder dass unterschiedlich große Schneidteile in die Aufnahme einsetzbar sind.

Die Vorrichtung kann insbesondere dazu ausgebildet sein, für einen Zerkleinerungsvorgang auf einer Arbeitsfläche aufgestellt zu werden.

Bei einer vorteilhaften Ausführung weist die Vorrichtung ein Gefäß auf. Insbesondere kann vorteilhaft vorgesehen sein, dass die Vorrichtung ein Gefäß mit zwei, insbesondere miteinander verbundene, zylinderförmigen Kammern aufweist, in die jeweils ein Rotationsmesser einsetzbar ist, und/oder dass die Vorrichtung ein Gefäß zwei ineinander übergehende, zylinderförmige Kammern aufweist, in die jeweils ein Rotationsmesser einsetzbar ist. Eine solche Ausführung hat den besonderen Vorteil, dass ein Mittdrehen des zu zerkleinernden Lebensmittelgutes mit den beiden Rotationsmessern vermieden ist, weil das Lebensmittelgut an den Wandungen der zylinderförmigen und an die Rotationsmesser angepassten Kammern festgehalten wird. Insbesondere zur Verstärkung dieses Effektes können die Innenseiten der Kammern axial ausgerichtete Rippen aufweisen.

Eine solche Vorrichtung mit zwei, insbesondere miteinander verbundenen, zylinderförmigen Kammern hat außerdem insbesondere den Vorteil, dass durch die Verwendung von zwei gleichzeitig mittels der Antriebsvorrichtung zur Rotation angetrieben Rotationsmessern Lebensmittel schneller und/oder in größeren Mengen verarbeitet werden können, als bei einer Vorrichtung, die lediglich ein einziges Rotationsmesser aufweist. Bei der erfindungsgemäßen Vorrichtung ist durch die besondere Form des Gefäßes in ganz besonders vorteilhafter Weise weitgehend vermieden, dass sich Teile des zu zerkleinernden Lebensmittelgutes dem Zerkleinerungsprozess entziehen, indem sie sich in Bereichen sammeln, die von den Rotationsmessern nicht erreicht werden.

Bei einer besonderen Ausführung weisen die von der Antriebsvorrichtung angetriebenen Rotationsmesser denselben Drehsinn auf. Eine solche Ausführung hat den besonderen Vorteil, dass die Tendenz des Lebensmittelgutes, sich mit einem der Rotationsmesser mitzudrehen weiter reduziert wird.

In vorteilhafter Weise kann die Vorrichtung als Deckel ausgebildet sein, der auf ein Gefäß - vorzugsweise die Gefäßöffnung vollständig abdeckend - aufsetzbar und/oder an einem Gefäß festlegbar ist. Das zerkleinerte Lebensmittelgut kann auf diese Weise sicher und zuverlässig in dem Gefäß aufgefangen werden. Insbesondere ist auf diese Weise auch vermieden, dass ungewünschte Dinge in das Gefäß zu der Speise gelangen. Dies insbesondere wenn im Küchenbereich gleichzeitig weitere Speisen zubereitet würden. Weiterhin ist eine Abnahme der Vorrichtung nach der Benutzung nicht notwendig, um einen separaten Deckel aufzusetzen. Dies gilt insbesondere bei zeitlich kurz unterbrochenen Nutzungen der Vorrichtung.

Bei einer besonderen Ausführung ist das Basisteil als Gefäß für das zerkleinerte Lebensmittelgut ausgebildet. Zusätzlich kann ein solches Gefäß, auch als Ständer zum Aufstellen der Lebensmittelzerkleinerungsvorrichtung auf einer Arbeitsfläche ausgebildet sein.

Bei einer besonderen Ausführung weist die Vorrichtung wenigstens ein, insbesondere zwei, Rotationsmesser zum rotierbaren Einsetzen in das Gefäß auf. Insbesondere kann vorteilhaft vorgesehen sein, dass die zwei Rotationsmesser derart rotierbar in das Gefäß einsetzbar sind, dass sie um parallele Rotationsachsen rotierbar sind.

Besonders vorteilhaft ist eine Ausführung, bei der das Gefäß wenigstens ein Rotationslager zum rotierbaren Lagern eines Rotationsmessers aufweist und/oder bei der das Gefäß zwei Rotationslager zum rotierbaren Lagern zweier, insbesondere paralleler, Rotationsmesser aufweist. Das Rotationslager kann insbesondere als ein auf der Innenseite des Gefäßbodens angeordneter Dorn ausgebildet sein, auf den ein Rotationsmesser aufsteckbar ist oder aufgesteckt ist. Alternativ oder zusätzlich kann auch vorgesehen sein, dass das Gefäß auf der Innenseite des Gefäßbodens zwei zueinander parallele Dorne als Rotationslager zum rotierbaren Lagern zweier Rotationsmesser aufweist, wobei auf jeden Dorn jeweils ein Rotationsmesser aufsteckbar ist oder aufgesteckt ist.

Bei einer vorteilhaften Ausführungsform ist die gelenkig an dem Basisteil festgelegte Antriebsvorrichtung wahlweise in eine Öffnungsstellung oder eine Geschlossenstellung schwenkbar ist. Hierbei kann insbesondere vorgesehen sein, dass die Antriebsvorrichtung in der Öffnungsstellung nicht mit dem in das Gefäß eingesetzten wenigstens einen Rotationsmesser gekoppelt ist. Alternativ oder zusätzlich kann auch vorgesehen sein, dass und/oder dass die Antriebsvorrichtung in der Geschlossenstellung mit dem in das Gefäß eingesetzten wenigstens einen Rotationsmesser gekoppelt ist und/oder dass die Antriebsvorrichtung beim Überführen von der Öffnungsstellung in die Geschlossenstellung automatisch mit dem in das Gefäß eingesetzten wenigstens einen Rotationsmesser in Wirkverbindung tritt. Bei einer besonders vorteilhaften Ausführung sind die gelenkig an dem Basisteil festgelegte Antriebsvorrichtung und das wenigstens eine, rotierbar in das Gefäß eingesetzte Rotationsmesser derart positioniert, dass sie beim Überführen der Antriebsvorrichtung von der Öffnungsstellung in die Geschlossenstellung automatisch miteinander in Wirkverbindung treten. Insbesondere eine solche Ausführung erlaubt es dem Benutzer, den Zerkleinerungsprozess gelegentlich zu unterbrechen, um durch Überführen der Antriebsvorrichtung in die Öffnungsstellung nach dem zerkleinerten Lebensmittelgut zu sehen. Dies insbesondere, wenn die Halteeinrichtung zum rotierbaren Lagern wenigstens eines Rotationsmessers durchsichtig ausgebildet ist.

Bei einer besonderen Ausführung weist das wenigstens eine Rotationsmesser eine Rotationswelle auf, an der wenigstens eine Klinge, insbesondere von der Rotationswelle ausgehend radial nach außen verlaufend, angeordnet ist. Alternativ oder zusätzlich kann vorgesehen sein, dass das wenigstens eine Rotationsmesser eine Rotationswelle aufweist, an der zwei um 180 Grad versetze Klingen, insbesondere jeweils von der Rotationswelle ausgehend radial nach außen verlaufend, angeordnet sind.

Ganz besonders vorteilhaft ist ein Küchengerät, das ein Gefäß zum Auffangen des zerkleinerten Gutes und eine erfindungsgemäße Lebensmittelzerkleinerungsvorrichtung, die als Deckel für das Gefäß ausgebildet ist, aufweist. Hierbei kann in vorteilhafter Weise insbesondere vorgesehen sein, dass die als Deckel ausgebildete Lebensmittelverkleinerungsvorrichtung die Gefäßöffnung vollständig abdeckend auf das Gefäß aufsetzbar ist. Insbesondere kann zusätzlich vorgesehen sein, dass die Lebensmittelzerkleinerungsvorrichtung für einen Zerkleinerungsvorgang vorübergehend, beispielsweise mit einer Schraubverbindung oder mit einer Rastverbindung, auf dem Gefäßrand festgelegt werden kann.

In vorteilhafter Weise kann das Küchengerät dazu ausgebildet sein, für einen Zerkleinerungsvorgang auf einer Arbeitsfläche aufgestellt zu werden.

Beispielsweise kann vorgesehen sein, dass das Gefäß des Küchengerätes als Ständer zum Aufstellen der Lebensmittelzerkleinerungsvorrichtung auf einer Arbeitsfläche ausgebildet ist. Beispielsweise können auf der Außenseite des Bodens des Gefäßes Standfüße, insbesondere rutschfeste Standfüße aus Gummi oder aus einem anderen Elastikmaterial, angeordnet sein.

In der Zeichnung ist der Erfindungsgegenstand schematisch dargestellt und wird anhand der Figuren nachfolgend beschrieben, wobei gleiche oder gleich wirkende Elemente zumeist mit denselben Bezugszeichen versehen sind. Dabei zeigen:
- Fig. 1: einen Seitenquerschnitt eines Ausführungsbeispiels einer erfindungsgemäßen Vorrichtung mit einem Basisteil und einem Betätigungsteil,
- Fig. 2: einen Seitenquerschnitt des Ausführungsbeispiels einer erfindungsgemäßen Vorrichtung mit einem Basisteil, wobei das Betätigungsteil durch eine Antriebsvorrichtung zum drehenden Antreiben von Rotationsmessern ersetzt ist,
- Fig. 3: einen Seitenquerschnitt des Ausführungsbeispiels einer erfindungsgemäßen Vorrichtung mit einem Basisteil, wobei das Betätigungsteil durch eine Antriebsvorrichtung zum drehenden Antreiben von Rotationsmessern ersetzt ist, in der Geschlossenstellung,
- Fig. 4 und 5: eine Darstellung eines Ausführungsbeispiels des Gelenks zum schwenkbaren Lagern des Betätigungsteils und der Antriebsvorrichtung an dem Basisteil,
- Fig. 6: eine mögliche Ausführung eines Gefäßes eines Ausführungsbeispiels einer erfindungsgemäßen Vorrichtung in einer Querschnittsdarstellung,
- Fig. 7: eine Querschnittsdarstellung eines anderen Ausführungsbeispiel einer erfindungsgemäßen Vorrichtung, und
- Fig. 8: eine Querschnittsdarstellung eines weiteren Ausführungsbeispiel einer erfindungsgemäßen Vorrichtung.

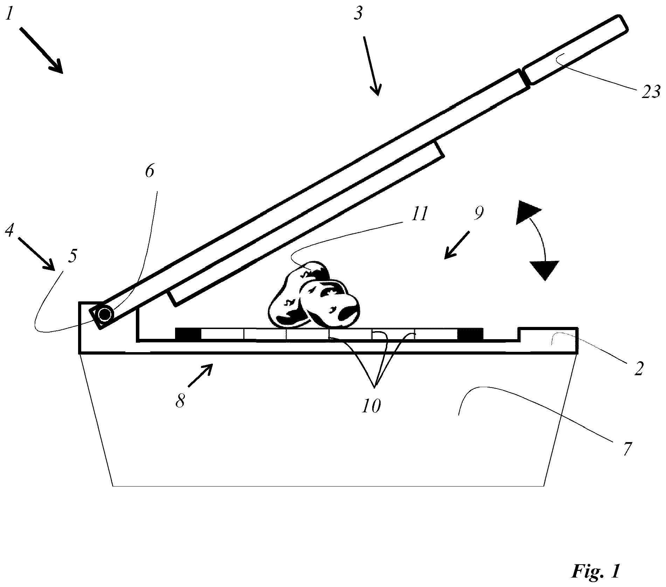

Fig. 1 zeigt einen Seitenquerschnitt eines Ausführungsbeispiels einer erfindungsgemäßen Vorrichtung 1 mit einem Basisteil 2 und einem Betätigungsteil 3, die durch ein Gelenk 4 miteinander verbunden sind. Das Gelenk 4 weist einen Gelenkkopf 5 und einen Gelenkmantel 6 auf, der den Gelenkkopf 5 wenigstens teilweise umschließt. Ein Griff 23 ist an dem Betätigungsteil 3 befestigt. Das Basisteil 2 ist auf ein Gefäß 7 aufgesetzt und weist eine Aufnahme 8 auf. In der Aufnahme 8 ist ein Schneidteil 9 angeordnet, wobei das Schneidteil 9 Schneidteilklingen 10 aufweist. Das Betätigungsteil 3 weist (nicht dargestellte) Pressstempel auf, die derart ausgebildet und angeordnet sind, dass sie in den Raum zwischen den Schneidklingen 10 eindringen können. Der Doppelpfeil illustriert die möglichen Schwenkrichtungen für das Betätigungsteil 3 um die Schwenkachse des Gelenks 4.

Ein Benutzer kann ein Lebensmittelgut 11 auf das Schneidteil 9 legen und dieses durch Verschwenken des Betätigungsteils 3 durch das Schneidteil 9 drücken. Bei dem Hindurchdrücken des Lebensmittelguts 11 durch das Schneidteil 9 erfolgt ein Zerschneiden des Lebensmittelguts 11 durch die Schneidteilklingen 9. Das zerkleinerte Lebensmittelgut 11 fällt in das Gefäß 7 und wird dort gesammelt.

Der Benutzer hat auch die Möglichkeit, verschiedene Lebensmittelgüter 11 nacheinander mit dem Schneidteil 9 zu zerschneiden. Alternativ können auch mehrere Lebensmittelgüter 11 gleichzeitig auf das Schneidteil 9 aufgelegt und zerschnitten werden. Der Benutzer kann darüber hinaus das Schneidteil 9 gegen ein anderes Schneidteil auszutauschen, um beispielsweise andere Schneidformen zu erhalten und/oder ein anderes Lebensmittelgut 11 zu zerschneiden. Dabei erfolgt der Schneidvorgang mit dem anderen Schneidteil analog zu der zuvor beschriebenen Art und Weise.

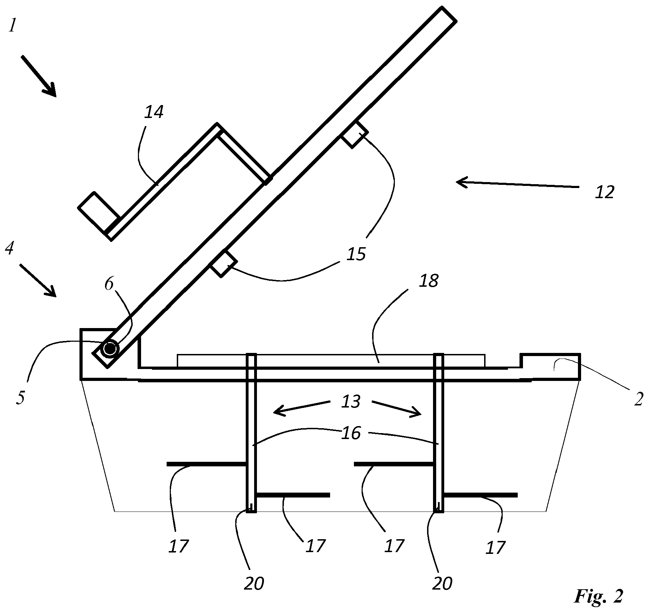

Fig. 2 zeigt einen Seitenquerschnitt des Ausführungsbeispiels einer erfindungsgemäßen Vorrichtung 1 mit einem Basisteil 2, wobei das Betätigungsteil 3 durch eine Antriebsvorrichtung 12 zum drehenden Antreiben von Rotationsmessern 13 ersetzt ist. Die Antriebsvorrichtung 12 weist eine Handkurbel 14 auf, an die jeweils eines der Rotationsmesser drehfest ankoppelbar ist. Außerdem weist die Antriebsvorrichtung 12 zwei Abtriebswellen 15 auf, an die jeweils eines der Rotationsmesser 13 drehfest ankoppelbar ist. Hierzu weist jede der Abtriebswellen 15 eine Innenverzahnung auf, in die beim Herunterklappen der Antriebsvorrichtung 12 automatisch die mit einer entsprechenden Außenverzahnung versehenen Enden der Rotationswellen 16 der Rotationsmesser 13 eingreifen. Beim Schwenken der Antriebsvorrichtung 12 lösen sich die Rotationswellen 16 der Rotationsmesser 13 automatisch von den Abtriebswellen 15.

An jeder der Rotationswellen 16 sind drei um 120 Grad versetze Klingen 17, von der Rotationswelle ausgehend radial nach außen verlaufend angeordnet. Alternativ ist es beispielsweise auch möglich, dass an jeder der Rotationswellen 16 sind zwei um 180 Grad versetze Klingen 17 angeordnet sind. Insbesondere können die Klingen auf unterschiedlichen axialen Höhen der Rotationswelle angeordnet sein.

In das Basisteil 2 ist statt des Schneidteils 9 eine Halteeinrichtung 18 einsetzbar, die zwei Lageraufnahmen 19 zum rotierbaren Lagern der Rotationswellen 16 aufweist.

Das Gefäß 7 weist auf der Innenseite des Gefäßbodens zwei zueinander parallele Dorne 20 als Rotationslager zum rotierbaren Lagern der Rotationswellen 16 der unteren Enden der Rotationsmesser 13 auf, wobei auf jeden Dorn 20 jeweils ein Rotationsmesser 13 aufsteckbar ist.

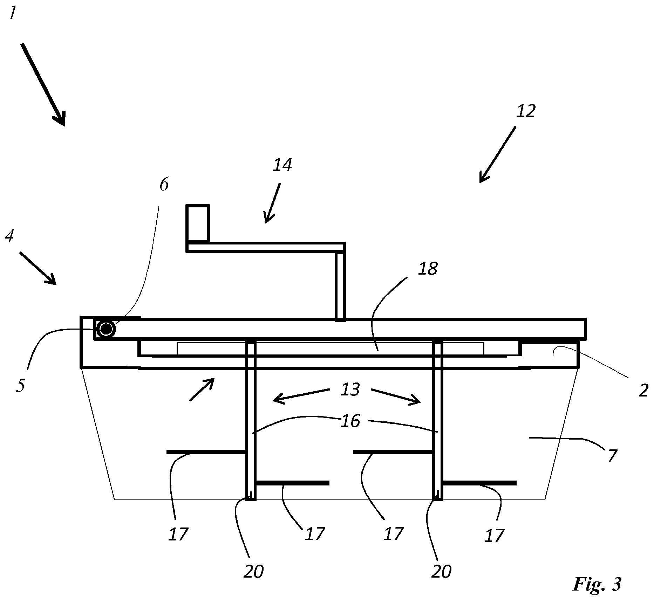

Fig. 3 zeigt einen Seitenquerschnitt des in Fig. 2 gezeigten Ausführungsbeispiels mit der Antriebsvorrichtung 12 in der Geschlossenstellung. In dieser Stellung stehen die Antriebsvorrichtung 12 und die Rotationsmesser 13 derart in Wirkverbindung, dass durch Drehen der Handkurbel 14 eine Rotation der Rotationsmesser 13 bewirkt werden kann. Hierbei kann die Antriebsvorrichtung 12 ein Übersetzungsgetriebe beinhalten, so dass die Drehzahlen der Rotationsmesser 13 wesentlich höher sein können, als die der Kurbel 14.

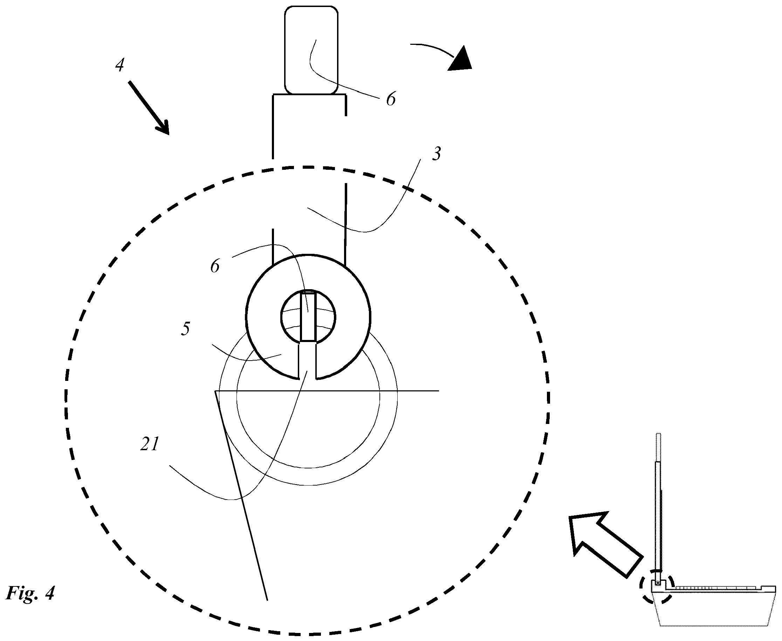

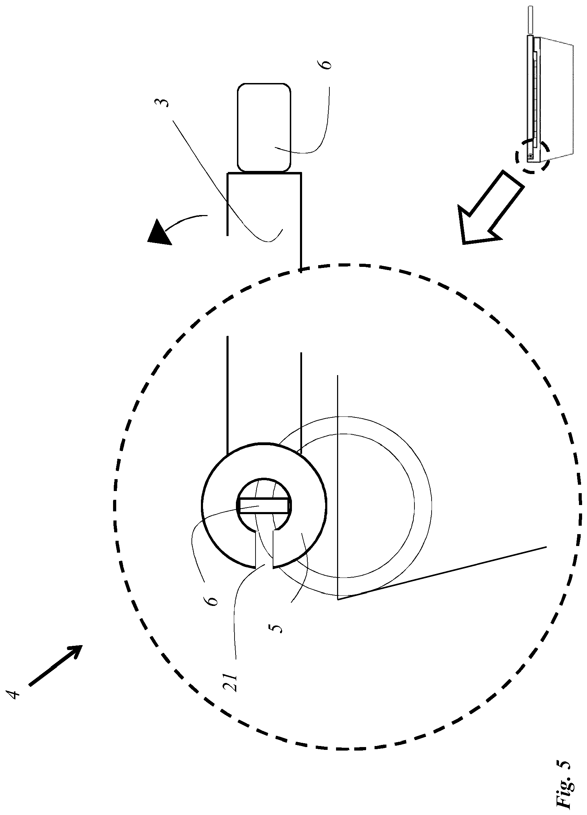

Die Figuren 4 und 5 zeigen eine Darstellung eines Ausführungsbeispiels eines Gelenks 4 zum schwenkbaren Lagern des Betätigungsteils 3 bzw. der Antriebsvorrichtung 12 an dem Basisteil 2. Das Gelenk ist derart ausgebildet, dass das Betätigungsteil 3 oder die Antriebsvorrichtung 12 bei Bedarf werkzeugfrei voneinander gelöst bzw. zueinander schwenkbar befestigt werden können.

Fig. 4 zeigt eine Seitenansicht einer vergrößerten Darstellung des Gelenks 4, in einer Stellung des Betätigungsteils 3, bei der dieses einen Winkel von 90° gegen das Basisteil 2 aufweist. Das Betätigungsteil 3 (bzw. die Antriebsvorrichtung 12) weist eine Gelenkaufnahme 5 auf, die im Querschnitt ringförmig ausgebildet ist und einen Durchgang 21 aufweist. Das Basisteil 3 weist den Gelenkkopf 6 auf. Der Durchgang 21 ist derart dimensioniert und ausgebildet, dass der quaderförmige Gelenkkopf 6 durch diesen hindurch von der Gelenkaufnahme 5 gelöst werden kann. In jeder anderen Schwenkstellung ist ein Lösen unmöglich, was beispielsweise Fig. 5 illustriert. Natürlich können auch umgekehrt das Betätigungsteil 3 und die Antriebsvorrichtung 12 den Gelenkkopf 6 aufweisen, während das Basisteil 3 die Gelenkaufnahme 5 aufweist.

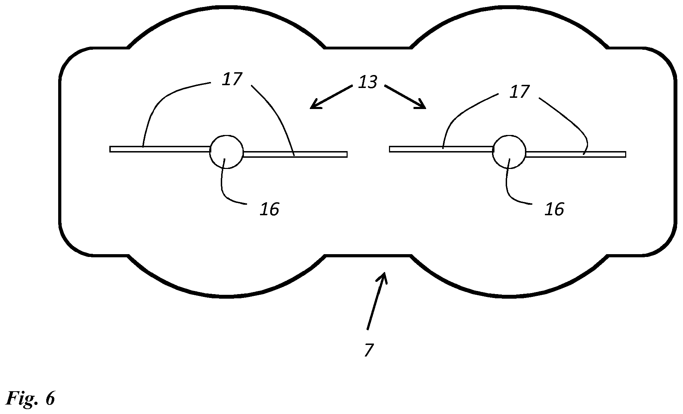

Das Gefäß 7 weist vorzugsweise zwei miteinander verbundene, zylinderförmige Kammern auf, in die jeweils ein Rotationsmesser 13 einsetzbar ist, wie dies in der Querschnittsdarstellung der Fig. 6 dargestellt ist.

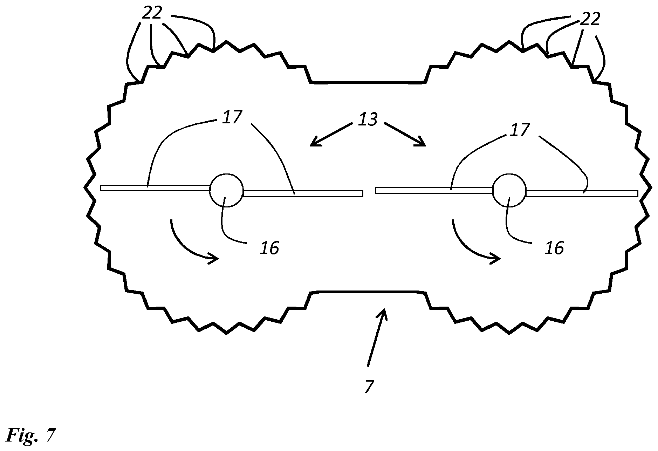

Fig. 7 zeigt eine Querschnittsdarstellung eines anderen Ausführungsbeispiels einer erfindungsgemäßen Vorrichtung. Bei diesem Ausführungsbeispiel weist das Gefäß zwei zylinderförmige, nämlich kreiszylinderförmige, Kammern mit in axialer Richtung (bezogen auf die Rotationsmesser 13) ausgerichteten Rippen 22 auf. Die parallel zu der Rotationsachse der Rotationsmesser 13 verlaufenden Rippen 22 haben den Vorteil, dass das zu zerkleinernde Lebensmittelgut zusätzlich daran gehindert wird, sich mit den rotierenden Rotationsmessern 13 mitzudrehen.

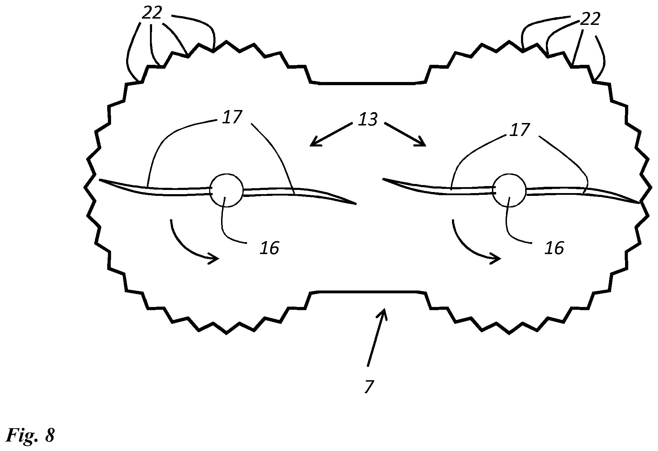

Fig. 8 zeigt eine Querschnittsdarstellung eines weiteren Ausführungsbeispiels einer erfindungsgemäßen Vorrichtung, die bis auf die Ausgestaltung der Klingen 17 genauso aufgebaut ist, wie die in Figur 7 dargestellte Ausführung. Die Klingen 17 sind bei dem weiteren Ausführungsbeispiel gebogen ausgebildet. Insbesondere bei dieser weiteren Ausführung werden die Rotationsmesser 13 mittels der Antriebsvorrichtung gleichzeitig und mit demselben Drehsinn zur Rotation angetrieben.

### Bezugszeichenliste:

- 1: Vorrichtung
- 2: Basisteil
- 3: Betätigungsteil
- 4: Gelenk
- 5: Gelenkkopf
- 6: Gelenkmantel
- 7: Gefäß
- 8: Aufnahme
- 9: Schneidteil
- 10: Schneidteilklingen
- 11: Lebensmittelgut
- 12: Antriebsvorrichtung
- 13: Rotationsmesser
- 14: Handkurbel
- 15: Abtriebswellen
- 16: Rotationswellen
- 17: Klingen
- 18: Halteeinrichtung
- 19: Lageraufnahmen
- 20: Dorne
- 21: Durchgang
- 22: Rippen
- 23: Griff

## Patentansprüche

1. Vorrichtung (1) zum Zerkleinern von Lebensmitteln mit einem Basisteil (2), das eine Aufnahme für ein Schneidteil (9) aufweist und an dem ein Betätigungsteil (3) derart gelenkig festlegbar ist, dass das Betätigungsteil (3) zum Hindurchdrücken von zu zerkleinerndem Lebensmittelgut (11) gegen das Schneidteil (9) schwenkbar ist, **dadurch gekennzeichnet, dass** eine Antriebsvorrichtung (12) zum drehenden Antreiben von Rotationsmessern (13) vorgesehen ist, die im Austausch gegen das Betätigungsteil (3) gelenkig an dem Basisteil (2) festlegbar oder festgelegt ist.

2. Vorrichtung (1) nach Anspruch 1, **dadurch gekennzeichnet, dass**
a. die Antriebsvorrichtung (12) eine Handkurbel (14) aufweist, und/oder dass
b. die Antriebsvorrichtung (12) ein Getriebe aufweist und/oder dass die Antriebsvorrichtung (12) ein Übersetzungsgetriebe aufweist, und/oder dass
c. die Antriebsvorrichtung (12) wenigstens eine Abtriebswelle (15) aufweist, an die ein Rotationsmesser (13) drehfest ankoppelbar ist und/oder dass die Antriebsvorrichtung (12) zwei Abtriebswellen (15) aufweist, an die jeweils ein Rotationsmesser (13) drehfest ankoppelbar ist.

3. Vorrichtung (1) nach Anspruch 1 oder 2, **dadurch gekennzeichnet, dass**
a. das Basisteil (2) einerseits wenigstens einen Gelenkkopf (10) und das Betätigungsteil (3) und/oder die Antriebsvorrichtung (12) andererseits eine korrespondierende Gelenkaufnahme zur Bildung der gelenkigen Verbindung aufweist, oder dass
b. das Betätigungsteil (3) und/oder die Antriebsvorrichtung (12) einerseits wenigstens einen Gelenkkopf (5) und das Basisteil (2) andererseits eine korrespondierende Gelenkaufnahme zur Bildung der gelenkigen Verbindung aufweist.

4. Vorrichtung (1) nach einem der Ansprüche 1 bis 3, **dadurch gekennzeichnet, dass**
a. die gelenkige Verbindung derart ausgebildet ist, dass das Betätigungsteil (3) oder die Antriebsvorrichtung (12) wenigstens in einer vorgegebenen Schwenkstellung, von dem Basisteil (2), insbesondere werkzeugfrei und/oder ausschließlich durch Auseinanderziehen von Betätigungsteil (3) und Basisteil (2), lösbar ist und/oder dass
b. die gelenkige Verbindung derart ausgebildet ist, dass das Betätigungsteil (3) oder die Antriebsvorrichtung (12) ausschließlich in einer vorgegebenen Schwenkstellung oder in einem vorgegebenen Schwenkstellungsbereich, von dem Basisteil (2), insbesondere werkzeugfrei und/oder ausschließlich durch Auseinanderziehen von Betätigungsteil (3) und Basisteil (2), lösbar ist.

5. Vorrichtung (1) nach Anspruch 4, **dadurch gekennzeichnet, dass**
a. die die vorgegebene Schwenkstellung bei einem Winkel zwischen der Ebene des Basisteils (2) und der Ebene des Betätigungsteils im Bereich von 80° bis 100°, insbesondere von 90°, vorliegt und/oder dass
b. der vorgegebene Schwenkstellungsbereich einen Winkelbereich zwischen der Ebene des Basisteils (2) und der Ebene des Betätigungsteils von 70° bis 110°, insbesondere von 80° bis 100°, insbesondere von 85° bis 95° aufweist.

6. Vorrichtung (1) nach einem der Ansprüche 3 bis 5, **dadurch gekennzeichnet, dass**
a. die Gelenkkopfaufnahme eine radiale Öffnung aufweist, durch die der Gelenkkopf (5) aus der Gelenkkopfaufnahme in radialer Richtung herausnehmbar oder einsetzbar ist und/oder dass
b. die Gelenkkopfaufnahme eine Öffnung aufweist, durch die der Gelenkkopf (5) aus der Gelenkkopfaufnahme entlang einer von der Richtung der Schwenkachse der gelenkigen Verbindung verschiedenen Richtung herausnehmbar oder einsetzbar ist, und/oder dass
c. der Gelenkkopf (5) im Querschnitt unrund, insbesondere quaderförmig, ausgebildet ist und/oder dass die gelenkige Verbindung als Scharniergelenk ausgebildet ist.

7. Vorrichtung (1) nach einem der Ansprüche 1 bis 6, **dadurch gekennzeichnet, dass**
a. die Vorrichtung (1) wenigstens eine Antriebseinrichtung, insbesondere einen Federantrieb, zum Unterstützen oder Bewirken der Schwenkbewegung des Betätigungsteil (3) und/oder der Antriebsvorrichtung (12) von einer Schließstellung in eine Einlegestellung und/oder von einer Einlegestellung in eine Schließstellung aufweist, oder dass
b. die Vorrichtung (1) wenigstens eine Antriebseinrichtung, insbesondere einen Federantrieb, zum Unterstützen oder Bewirken der Schwenkbewegung des Betätigungsteil (3) des und/oder der Antriebsvorrichtung (12) von einer Schließstellung in eine Einlegestellung und/oder von einer Einlegestellung in eine Schließstellung aufweist, wobei die Antriebseinrichtung wahlweise zuschaltbar oder abschaltbar ist und/oder dass die Unterstützungskraft der Antriebseinrichtung einstellbar ist.

8. Vorrichtung (1) nach einem der Ansprüche 1 bis 7, **dadurch gekennzeichnet, dass**
a. das Basisteil (2) einen Durchgang (21) für das zerkleinerte Lebensmittelgut (11) aufweist, und/oder dass
b. gleichzeitig mehrere Schneidteile in die Aufnahme einsetzbar sind und/oder dass unterschiedlich große Schneidteile in die Aufnahme einsetzbar sind.

9. Vorrichtung (1) nach einem der Ansprüche 1 bis 8, **dadurch gekennzeichnet, dass**
a. eine Halteeinrichtung (18) vorgesehen ist, die in das Basisteil (2) zum rotierbaren Lagern wenigstens eines Rotationsmessers (13) einsetzbar ist oder eingesetzt ist und/oder dass
b. eine Halteeinrichtung (18) vorgesehen ist, die in das Basisteil (2) einsetzbar ist und die zwei Lageraufnahmen zum rotierbaren Lagern von zwei Rotationsmessern aufweist, und/oder dass
c. eine Halteeinrichtung (18) vorgesehen ist, die in das Basisteil (2) einsetzbar ist und die zwei Lageraufnahmen zum rotierbaren Lagern von zwei Rotationsmessern aufweist, wobei die Lageraufnahmen durch zwei zueinander parallele Durchbrüche in der Halteeinrichtung gebildet sind.

10. Vorrichtung (1) nach einem der Ansprüche 1 bis 9, **dadurch gekennzeichnet, dass**
a. die Vorrichtung (1) dazu ausgebildet ist, für einen Zerkleinerungsvorgang auf einer Arbeitsfläche aufgestellt zu werden und/oder dass die Vorrichtung einen Ständer zum Aufstellen auf einer Arbeitsfläche aufweist, und/oder dass
b. die Vorrichtung ein Gefäß (7) aufweist und/oder dass
c. die Vorrichtung ein Gefäß (7) mit zwei, insbesondere miteinander verbundene, zylinderförmigen Kammern aufweist, in die jeweils ein Rotationsmesser (13) einsetzbar ist, und/oder dass
d. die Vorrichtung ein Gefäß (7) mit zwei ineinander übergehenden, zylinderförmigen Kammern aufweist, in die jeweils ein Rotationsmesser (13) einsetzbar ist, und/oder dass
e. die Vorrichtung als Deckel ausgebildet ist, der auf ein Gefäß (7) - vorzugsweise die Gefäßöffnung vollständig abdeckend - aufsetzbar und/oder an einem Gefäß (7) festlegbar ist, und/oder dass
f. das Basisteil (2) auf ein Gefäß (7) aufsetzbar ist und/oder dass das Basisteil (2) als Gefäß für das zerkleinerte Lebensmittelgut (11) ausgebildet ist.

11. Vorrichtung (1) nach Anspruch 10, **dadurch gekennzeichnet, dass**
a. die Vorrichtung wenigstens ein, insbesondere zwei, Rotationsmesser (13) zum rotierbaren Einsetzen in das Gefäß (7) aufweist, und/oder dass
b. die Vorrichtung zwei Rotationsmesser (13) zum rotierbaren Einsetzen in das Gefäß (7) aufweist, wobei die zwei Rotationsmesser (13) derart rotierbar in das Gefäß (7) einsetzbar sind, dass sie um parallele Rotationsachsen rotierbar sind, und/oder dass
c. das Gefäß (7) wenigstens ein Rotationslager zum rotierbaren Lagern eines Rotationsmessers aufweist und/oder dass das Gefäß (7) zwei Rotationslager zum rotierbaren Lagern zweier, insbesondere paralleler, Rotationsmesser (13) aufweist, und/oder dass
d. das Gefäß (7) wenigstens ein Rotationslager zum rotierbaren Lagern eines Rotationsmessers aufweist, wobei das Rotationslager als ein auf der Innenseite des Gefäßbodens angeordneter Dorn ausgebildet ist, auf den ein Rotationsmesser (13) aufsteckbar ist oder aufgesteckt ist und/oder dass
e. das Gefäß (7) auf der Innenseite des Gefäßbodens zwei zueinander parallele Dorne (20) als Rotationslager zum rotierbaren Lagern zweier Rotationsmesser (13) aufweist, wobei auf jeden Dorn jeweils ein Rotationsmesser (13) aufsteckbar ist oder aufgesteckt ist.

12. Vorrichtung (1) nach einem der Ansprüche 1 bis 11, **dadurch gekennzeichnet, dass** die gelenkig an dem Basisteil (2) festgelegte Antriebsvorrichtung (12) wahlweise in eine Öffnungsstellung oder eine Geschlossenstellung schwenkbar ist.

13. Vorrichtung (1) nach Anspruch 12, **dadurch gekennzeichnet, dass**
a. die Antriebsvorrichtung (12) in der Öffnungsstellung nicht mit dem in das Gefäß (7) eingesetzten wenigstens einen Rotationsmesser (13) gekoppelt ist, und/oder dass
b. die Antriebsvorrichtung (12) in der Geschlossenstellung mit dem in das Gefäß (7) eingesetzten wenigstens einen Rotationsmesser (13) gekoppelt ist und/oder dass
c. die Antriebsvorrichtung (12) beim Überführen von der Öffnungsstellung in die Geschlossenstellung automatisch mit dem in das Gefäß (7) eingesetzten wenigstens einen Rotationsmesser (13) in Wirkverbindung tritt, und/oder dass
d. die gelenkig an dem Basisteil (2) festgelegte Antriebsvorrichtung (12) und das wenigstens eine, rotierbar in das Gefäß (7) eingesetzte Rotationsmesser (13) derart positioniert sind, dass sie beim Überführen der Antriebsvorrichtung (12) von der Öffnungsstellung in die Geschlossenstellung automatisch miteinander in Wirkverbindung treten.

14. Vorrichtung (1) nach einem der Ansprüche 1 bis 13, **dadurch gekennzeichnet, dass**
a. das wenigstens eine Rotationsmesser (13) eine Rotationswelle (16) aufweist, an der wenigstens eine Klinge, insbesondere von der Rotationswelle (16) ausgehend radial nach außen verlaufend, angeordnet ist, und/oder dass
b. das wenigstens eine Rotationsmesser (13) eine Rotationswelle (16) aufweist, an der zwei um 180 Grad versetze Klingen, insbesondere jeweils von der Rotationswelle (16) ausgehend radial nach außen verlaufend, angeordnet sind oder dass das wenigstens eine Rotationsmesser (13) eine Rotationswelle (16) aufweist, an der drei um 120 Grad versetze Klingen, insbesondere jeweils von der Rotationswelle (16) ausgehend radial nach außen verlaufend, angeordnet sind, und/oder dass
c. das wenigstens eine Rotationsmesser (13) eine Rotationswelle (16) aufweist, an der mehrere Klingen (17) auf unterschiedlichen axialen Höhen der Rotationswelle (16) angeordnet sind.

15. Küchengerät mit
a. einer Vorrichtung nach einem der Ansprüche 1 bis 14, die als Deckel ausgebildet ist, und mit einem Gefäß (7), auf das die Vorrichtung - vorzugsweise die Gefäßöffnung vollständig abdeckend - aufgesetzt ist und/oder an dem die Vorrichtung, vorzugsweise werkzeugfrei wieder lösbar, festgelegt ist, oder mit
b. einer Vorrichtung nach einem der Ansprüche 1 bis 14, die als Deckel ausgebildet ist, und mit einem Gefäß (7), auf das die Vorrichtung - vorzugsweise die Gefäßöffnung vollständig abdeckend - aufgesetzt ist und/oder an dem die Vorrichtung, vorzugsweise werkzeugfrei wieder lösbar, festgelegt ist, wobei das Küchengerät dazu ausgebildet ist, für einen Zerkleinerungsvorgang auf einer Arbeitsfläche aufgestellt zu werden.

## Claims

1. Device (1) for the comminution of foodstuffs, having a base part (2) which has a receptacle for a cutting part (9) and to which an actuation part (3) is articulatedly fixable such that the actuation part (3) can be pivoted toward the cutting part (9) in order to push through food items (11) for comminution, **characterized in that** a drive device (12) for driving rotary cutters (13) in rotation is provided, which drive device is articulatedly fixable or fixed, in exchange for the actuation part (3), to the base part (2).

2. Device (1) according to Claim 1, **characterized in that**
a. the drive device (12) has a hand crank (14), and/or **in that**
b. the drive device (12) has a gearing, and/or in that the drive device (12) has a speed-increasing gearing, and/or **in that**
c. the drive device (12) has at least one driven shaft (15) to which a rotary cutter (13) can be rotationally conjointly coupled, and/or **in that** the drive device (12) has two driven shafts (15), to which in each case one rotary cutter (13) can be rotationally conjointly coupled.

3. Device (1) according to Claim 1 or 2, **characterized in that**
a. the base part (2), on the one hand, has at least one joint head (10) and the actuation part (3) and/or the drive device (12), on the other hand, has a corresponding joint receptacle for forming the articulated connection, or **in that**
b. the actuation part (3) and/or the drive device (12), on the one hand, has at least one joint head (5) and the base part (2), on the other hand, has a corresponding joint receptacle for forming the articulated connection.

4. Device (1) according to one of Claims 1 to 3, **characterized in that**
a. the articulated connection is designed such that the actuation part (3) or the drive device (12), at least in a predefined pivoting position, is detachable from the base part (2), in particular without tools and/or exclusively by virtue of the actuation part (3) and base part (2) being pulled apart, and/or **in that**
b. the articulated connection is designed such that the actuation part (3) or the drive device (12), exclusively in a predefined pivoting position or in a predefined pivoting position range, is detachable from the base part (2), in particular without tools and/or exclusively by virtue of the actuation part (3) and base part (2) being pulled apart.

5. Device (1) according to Claim 4, **characterized in that**
a. the predefined pivoting position lies at an angle in the range from 80° to 100°, in particular at an angle of 90°, between the plane of the base part (2) and the plane of the actuation part, and/or **in that**
b. the predefined pivoting position range has an angle range of 70° to 110°, in particular of 80° to 100°, in particular of 85° to 95°, between the plane of the base part (2) and the plane of the actuation part.

6. Device (1) according to one of Claims 3 to 5, **characterized in that**
a. the joint head receptacle has a radial opening through which the joint head (5) can be removed from or inserted into the joint head receptacle in a radial direction, and/or in that
b. the joint head receptacle has an opening through which the joint head (5) can be removed from or inserted into the joint head receptacle along a direction that differs from the direction of the pivot axis of the articulated connection, and/or **in that**
c.the joint head (5) is of non-circular, in particular rectangular, form in cross section, and/or **in that** the articulated connection is in the form of a hinged joint.

7. Device (1) according to one of Claims 1 to 6, **characterized in that**
a.the device (1) has at least one drive device, in particular a spring drive, for assisting or effecting the pivoting movement of the actuation part (3) and/or of the drive device (12) from a closed position into a loading position and/or from a loading position into a closed position, or **in that**
b. the device (1) has at least one drive device, in particular a spring drive, for assisting or effecting the pivoting movement of the actuation part (3) of the and/or of the drive device (12) from a closed position into a loading position and/or from a loading position into a closed position, wherein the drive device is selectively activatable or deactivatable and/or **in that** the assistance force of the drive device is adjustable.

8. Device (1) according to one of Claims 1 to 7, **characterized in that**
a. the base part (2) has a passage (21) for the comminuted food items (11), and/or **in that**
b.multiple cutting parts can be inserted simultaneously into the receptacle and/or **in that** cutting parts of different size can be inserted into the receptacle.

9. Device (1) according to one of Claims 1 to 8, **characterized in that**
a holding device (18) is provided which, for the rotatable mounting of at least one rotary cutter (13), is insertable or inserted into the base part (2), and/or **in that**
ba holding device (18) is provided which is insertable into the base part (2) and which has two bearing receptacles for the rotatable mounting of two rotary cutters, and/or **in that**
ca holding device (18) is provided which is insertable into the base part (2) and which has two bearing receptacles for the rotatable mounting of two rotary cutters, wherein the bearing receptacles are formed by two mutually parallel apertures in the holding device.

10. Device (1) according to one of Claims 1 to 9, **characterized in that**
a. the device (1) is designed to be placed on a worktop for a comminution process, and/or **in that** the device has a stand for placing on a worktop, and/or **in that**
b. the device has a container (7), and/or **in that**
c. the device has a container (2) with two, in particular interconnected, cylindrical chambers, into which in each case one rotary cutter (13) can be inserted, and/or **in that**
d.the device has a container (7) with two cylindrical chambers which merge into one another and into which in each case one rotary cutter (13) can be inserted, and/or **in that**
e. the device is in the form of a cover which can be mounted onto a container (7) - preferably so as to completely cover the container opening - and/or can be fixed to a container (7), and/or **in that**
f. the base part (2) can be mounted onto a container (7), and/or **in that** the base part (2) is formed as a container for the comminuted food items (11).

11. Device (1) according to Claim 10, **characterized in that**
a. the device has at least one, in particular two, rotary cutters (13) for rotatable insertion into the container (7), and/or **in that**
b. the device has two rotary cutters (13) for rotatable insertion into the container (7), wherein the two rotary cutters (13) can be inserted rotatably into the container (7) such that said rotary cutters are rotatable about parallel axes of rotation, and/or **in that**
c. the container (7) has at least one rotary bearing for the rotatable mounting of a rotary cutter, and/or **in that** the container (7) has two rotary bearings for the rotatable mounting of two, in particular parallel, rotary cutters (13), and/or **in that**
d. the container (7) has at least one rotary bearing for the rotatable mounting of a rotary cutter, wherein the rotary bearing is in the form of a pin which is arranged on the inner side of the container base and onto which a rotary cutter (13) can be or is mounted, and/or **in that**
e. the container (7) has, on the inner side of the container base, two mutually parallel pins (20) as rotary bearings for the rotatable mounting of two rotary cutters (13), wherein in each case one rotary cutter (13) can be or is mounted onto each pin.

12. Device (1) according to one of Claims 1 to 11, **characterized in that** the drive device (12), which is articulatedly fixed to the base part (2), can be selectively pivoted into an open position or a closed position.

13. Device (1) according to Claim 12, **characterized in that**
a. the drive device (12), in the open position, is not coupled to the at least one rotary cutter (13) inserted into the container (7), and/or **in that**
b. the drive device (12), in the closed position, is coupled to the at least one rotary cutter (13) inserted into the container (7), and/or **in that**
c. the drive device (12), during the movement from the open position into the closed position, is automatically placed in operative connection with the at least one rotary cutter (13) inserted into the container (7), and/or **in that**
d. the drive device (12), which is articulatedly fixed to the base part (2), and the at least one rotary cutter (13) inserted rotatably into the container (7) are positioned such that they are automatically placed in operative connection with one another during the movement of the drive device (12) from the open position into the closed position.

14. Device (1) according to one of Claims 1 to 13, **characterized in that**
a. the at least one rotary cutter (13) has a rotary shaft (16) on which at least one blade is arranged, in particular so as to run radially outward proceeding from the rotary shaft (16), and/or **in that**
b. the at least one rotary cutter (13) has a rotary shaft (16) on which two blades, which are offset by 180 degrees, are arranged in particular so as to run in each case radially outward proceeding from the rotary shaft (16), or **in that** the at least one rotary cutter (13) has a rotary shaft (16) on which three blades, which are offset by 120 degrees, are arranged in particular so as to run in each case radially outward proceeding from the rotary shaft (16), and/or **in that**
c. the at least one rotary cutter (13) has a rotary shaft (16) on which multiple blades (17) are arranged at different axial heights of the rotary shaft (16).

15. Kitchen appliance having
a. a device according to one of Claims 1 to 14, said device being in the form of a cover, and having a container (7) onto which the device is mounted - preferably so as to completely cover the container opening - and/or to which the device is fixed, preferably so as to be detachable again without tools, or having
b. a device according to one of Claims 1 to 14, said device being in the form of a cover, and having a container (7) onto which the device is mounted - preferably so as to completely cover the container opening - and/or to which the device is fixed, preferably so as to be detachable again without tools, wherein the kitchen appliance is designed to be placed on a worktop for a comminution process.

## Revendications

1. Dispositif (1) de broyage de denrées alimentaires avec une partie de base (2) comportant un logement pour une partie tranchante (9) et pouvant être fixée de telle sorte de façon articulée à la partie d'actionnement (3) que la partie d'actionnement (3) peut pivoter pour presser au travers des denrées alimentaires (11) à broyer contre la partie tranchante (9), **caractérisé en ce qu'**un dispositif d'entraînement (12) est prévu pour entraîner en rotation des couteaux rotatifs (13) pouvant être fixés ou étant fixés en échange de façon articulée à la partie de base (2) contre la partie d'actionnement (3).

2. Dispositif (1) selon la revendication 1, **caractérisé en ce que** :
a. le dispositif d'entraînement (12) comporte une manivelle (14) ; et/ou que
b. le dispositif d'entraînement (12) comporte un engrenage et/ou que le dispositif d'entraînement (12) comporte un engrenage de démultiplication ; et/ou que
c. le dispositif d'entraînement (12) comporte au moins un arbre d'entraînement en sortie (15) auquel un couteau rotatif (13) peut être couplé solidairement en rotation et/ou que le dispositif d'entraînement (12) comporte deux arbres d'entraînement en sortie (15) auxquels respectivement un couteau rotatif (13) peut être couplé solidairement en rotation.

3. Dispositif (1) selon la revendication 1 ou 2, **caractérisé en ce que** :
a. la partie de base (2) comporte d'une part au moins une tête d'articulation (10) et la partie d'actionnement (3) et/ou le dispositif d'entraînement (12) comportent d'autre part un logement d'articulation correspondant pour la formation de la liaison articulée ; ou que
b. la partie d'actionnement (3) et/ou le dispositif d'entraînement (12) comportent d'une part au moins une tête d'articulation (5) et la partie de base (2) comporte d'autre part un logement d'articulation correspondant pour la formation de la liaison articulée.

4. Dispositif (1) selon l'une quelconque des revendications 1 à 3, **caractérisé en ce que** :
a. la liaison articulée est réalisée de telle sorte que la partie d'actionnement (3) ou le dispositif d'entraînement (12) peuvent être retirés, au moins dans une position de pivotement prédéfinie, hors de la partie de base (2), notamment sans outil et/ou uniquement en tirant la partie d'actionnement (3) et la partie de base (2) ; et/ou que
b. la liaison articulée est réalisée de telle sorte que la partie d'actionnement (3) ou le dispositif d'entraînement (12) peuvent être retirés, uniquement dans une position de pivotement prédéfinie ou dans une zone de position de pivotement prédéfinie, hors de la partie de base (2), notamment sans outil et/ou uniquement en tirant la partie d'actionnement (3) et la partie de base (2).

5. Dispositif (1) selon la revendication 4, **caractérisé en ce que** :
a. la position de pivotement prédéfinie se situe, en présence d'un angle entre le plan de la partie de base (2) et le plan de la partie d'actionnement, dans la région de 80° à 100°, notamment de 90° ; et/ou que
b. la zone de position de pivotement prédéfinie comporte une plage angulaire entre le plan de la partie de base (2) et le plan de la partie d'actionnement allant de 70° à 110°, notamment de 80° à 100°, notamment de 85° à 95°.

6. Dispositif (1) selon l'une quelconque des revendications 3 à 5, **caractérisé en ce que** :
a. le logement de tête d'articulation comporte une ouverture radiale à travers laquelle la tête d'articulation (5) peut être retirée hors du logement de tête d'articulation dans la direction radiale ou insérée ; et/ou que
b. le logement de tête d'articulation comporte une ouverture à travers laquelle la tête d'articulation (5) peut être retirée hors du logement de tête d'articulation le long d'une direction différente de la direction de l'axe de pivotement de la liaison articulée ou insérée ; et/ou que
c. la tête d'articulation (5) est réalisée de façon non ronde en section transversale, notamment en forme de parallélépipède rectangle et/ou que la liaison articulée est réalisée sous la forme d'une articulation à charnière.

7. Dispositif (1) selon l'une quelconque des revendications 1 à 6, **caractérisé en ce que** :
a. le dispositif (1) comporte au moins un dispositif d'entraînement, notamment un entraînement à ressort, pour soutenir ou provoquer le mouvement de pivotement de la partie d'actionnement (3) et/ou du dispositif d'entraînement (12) d'une position de fermeture dans une position d'insertion et/ou d'une position d'insertion dans une position de fermeture ; ou que
b. le dispositif (1) comporte au moins un dispositif d'entraînement, notamment un entraînement à ressort, pour soutenir ou provoquer le mouvement de pivotement de la partie d'actionnement (3) du et/ou du dispositif d'entraînement (12) d'une position de fermeture dans une position d'insertion et/ou d'une position d'insertion dans une position de fermeture, le dispositif d'entraînement pouvant au choix être connecté ou déconnecté et/ou la force de soutien du dispositif d'entraînement étant réglable.

8. Dispositif (1) selon l'une quelconque des revendications 1 à 7, **caractérisé en ce que** :
a. la partie de base (2) comporte un passage (21) pour les denrées alimentaires (11) broyées ; et/ou que
b. plusieurs parties tranchantes peuvent être insérées simultanément dans le logement et/ou que des parties tranchantes de tailles différentes peuvent être insérées dans le logement.

9. Dispositif (1) selon l'une quelconque des revendications 1 à 8, **caractérisé en ce que** :
a. un dispositif d'arrêt (18) est prévu et peut être inséré ou est inséré dans la partie de base (2) pour maintenir de façon pivotante au moins un couteau rotatif (13) ; et/ou que
b. un dispositif d'arrêt (18) est prévu et peut être inséré dans la partie de base (2) et comporte deux logements de palier pour maintenir de façon pivotante deux couteaux rotatifs ; et/ou que
c. un dispositif d'arrêt (18) est prévu et peut être inséré dans la partie de base (2) et comporte deux logements de palier pour maintenir de façon pivotante deux couteaux rotatifs, les logements de palier étant formés par deux passages traversants parallèles réalisés dans le dispositif d'arrêt.

10. Dispositif (1) selon l'une quelconque des revendications 1 à 9, **caractérisé en ce que** :
a. le dispositif (1) est réalisé pour être placé sur une surface de travail pour une activité de broyage et/ou que le dispositif comporte un support à placer sur une surface de travail ; et/ou que
b. le dispositif comporte un récipient (7) ; et/ou que
c. le dispositif comporte un récipient (7) avec deux compartiments en forme de cylindre, notamment reliés entre eux dans lesquels respectivement un couteau rotatif (13) peut être inséré ; et/ou que
d. le dispositif comporte un récipient (7) avec deux compartiments en forme de cylindre en continuité l'un avec l'autre dans lesquels respectivement un couteau rotatif (13) peut être inséré ; et/ou que
e. le dispositif est réalisé sous la forme d'un couvercle pouvant être placé sur un récipient (7) - de préférence de façon à recouvrir entièrement l'ouverture de récipient et/ou pouvant être fixé à un récipient (7) ; et/ou que
f. la partie de base (2) peut être placée sur un récipient (7) et/ou que la partie de base (2) est réalisée sous la forme d'un récipient prévu pour les denrées alimentaires (11) broyées.

11. Dispositif (1) selon la revendication 10, **caractérisé en ce que** :
a. le dispositif comporte au moins un, notamment deux, couteaux rotatifs (13) à insérer de façon pivotante dans le récipient (7) ; et/ou que
b. le dispositif comporte deux couteaux rotatifs (13) à insérer de façon pivotante dans le récipient (7), les deux couteaux rotatifs (13) étant insérés de façon à pouvoir tourner de telle sorte dans le récipient (7) qu'ils peuvent tourner autour d'axes de rotation parallèles ; et/ou que
c. le récipient (7) comporte au moins un palier tournant pour maintenir de façon pivotante un couteau rotatif et/ou que le récipient (7) comporte deux paliers tournants pour maintenir de façon pivotante deux couteaux rotatifs (13) notamment parallèles ; et/ou que
d. le récipient (7) comporte au moins un palier tournant pour maintenir de façon pivotante un couteau rotatif, le palier tournant étant réalisé sous la forme d'une broche disposée sur le côté intérieur du fond de récipient et sur laquelle un couteau rotatif (13) peut être enfiché ou est enfiché ; et/ou que
e. le récipient (7) comporte sur le côté intérieur du fond de récipient deux broches (20) parallèles l'une par rapport à l'autre réalisées sous la forme de paliers tournants pour maintenir de façon pivotante deux couteaux rotatifs (13), un couteau rotatif (13) pouvant respectivement être enfiché ou étant respectivement enfiché sur chaque broche.

12. Dispositif (1) selon l'une quelconque des revendications 1 à 11, **caractérisé en ce que** le dispositif d'entraînement (12) fixé de façon articulée à la partie de base (2) peut pivoter au choix dans une position d'ouverture ou dans une position de fermeture.

13. Dispositif (1) selon la revendication 12, **caractérisé en ce que** :
a. le dispositif d'entraînement (12) n'est pas couplé dans la position d'ouverture avec l'au moins un couteau rotatif (13) inséré dans le récipient (7) ; et/ou que
b. le dispositif d'entraînement (12) est couplé dans la position de fermeture avec l'au moins un couteau rotatif (13) inséré dans le récipient (7) ; et/ou que
c. le dispositif d'entraînement (12) entre automatiquement en liaison active, lors du passage de la position d'ouverture dans la position de fermeture, avec l'au moins un couteau rotatif (13) inséré dans le récipient (7) ; et/ou que
d. le dispositif d'entraînement (12) fixé de façon articulée à la partie de base (2) et l'au moins un couteau rotatif (13) inséré de façon à pouvoir tourner dans le récipient (7) sont positionnés de telle sorte qu'ils entrent automatiquement en liaison active l'un avec l'autre lors du passage du dispositif d'entraînement (12) de la position d'ouverture dans la position de fermeture.

14. Dispositif (1) selon l'une quelconque des revendications 1 à 13, **caractérisé en ce que** :
a. l'au moins un couteau rotatif (13) comporte un arbre tournant (16) au niveau duquel au moins une lame est disposée, celle-ci s'étendant notamment dans le plan radial vers l'extérieur en partant de l'arbre tournant (16) ; et/ou que
b. l'au moins un couteau rotatif (13) comporte un arbre tournant (16) au niveau duquel deux lames décalées de 180 degrés sont disposées, celles-ci s'étendant notamment respectivement dans le plan radial vers l'extérieur à partir de l'arbre tournant (16) ou que l'au moins un couteau rotatif (13) comporte un arbre tournant (16) au niveau duquel trois lames décalées de 120 degrés sont disposées, notamment respectivement dans le plan radial vers l'extérieur à partir de l'arbre tournant (16) ; et/ou que
c. l'au moins un couteau rotatif (13) comporte un arbre tournant (16) au niveau duquel plusieurs lames (17) sont disposées sur différentes hauteurs axiales de l'arbre tournant (16).

15. Appareil de cuisine avec :
a. un dispositif selon l'une quelconque des revendications 1 à 14 réalisé sous la forme d'un couvercle et avec un récipient (7) sur lequel le dispositif est placé - de préférence de façon à recouvrir entièrement l'ouverture de récipient - et/ou auquel le dispositif est fixé de façon amovible, de préférence sans outil ; ou avec
b. un dispositif selon l'une quelconque des revendications 1 à 14 réalisé sous la forme d'un couvercle et avec un récipient (7) sur lequel le dispositif est placé - de préférence de façon à recouvrir entièrement l'ouverture de récipient - et/ou auquel le dispositif est fixé de façon amovible, de préférence sans outil, l'appareil de cuisine étant réalisé pour être placé sur une surface de travail pour une activité de broyage.
